Europäisches Patentamt

European Patent Office

Office européen des brevets

(11) Publication number: **0 259 697 B1**

## EUROPEAN PATENT SPECIFICATION

(45) Date of publication of patent specification: **15.01.92**   (51) Int. Cl.⁵: **C09J 199/00**, C09F 1/04

(21) Application number: **87112357.6**

(22) Date of filing: **25.08.87**

(54) **Pressure sensitive adhesive composition and production thereof.**

(30) Priority: **25.08.86 US 900203**

(43) Date of publication of application:
**16.03.88 Bulletin 88/11**

(45) Publication of the grant of the patent:
**15.01.92 Bulletin 92/03**

(84) Designated Contracting States:
**BE DE FR GB IT NL SE**

(56) References cited:
FR-A- 2 142 410
GB-A- 592 852
US-A- 3 519 585
US-A- 4 566 997

CHEMICAL ABSTRACTS, vol. 83, no. 18, 3rd
November 1975, page 50, no. 148373h, Co-
lumbus, Ohio, US; & JP-A-75 44 234 (TOYO
INK MFG. CO., LTD) 21-04-1975

(73) Proprietor: **HERCULES INCORPORATED**
**Hercules Plaza**
**Wilmington Delaware 19894(US)**

(72) Inventor: **Hill, Charles H.**
**220 Peachtree Street**
**St. Simons Is. Georgia 31522(US)**
Inventor: **Memmo, Nicholas C.**
**6242 Warner Avenue Apt. 4B**
**Huntington Beach Ca. 92647(US)**
Inventor: **Phalen, William L., Jr.**
**115 Georgia Street**
**St. Simons Is. Georgia 31522(US)**
Inventor: **Suchanec, Richard Robert, Dr.**
**107 Meadowood Drive**
**Newark Delaware 19711(US)**

(74) Representative: **Lederer, Franz, Dr. et al**
**Lederer, Keller & Riederer Patentanwälte**
**Lucile-Grahn-Strasse 22**
**W-8000 München 80(DE)**

**Description**

This invention relates to a novel process for making tackifiers containing a metal resinate for rubber-based compositions and its use in pressure sensitive adhesives.

Pressure sensitive adhesives based on natural rubber or synthetic rubbers such as block copolymers of isoprene or styrene and containing a metal resinate as a tackifier component, are well-known. For instance, U.S. patent 3,929,703 discloses, in pressure sensitive adhesives based on natural rubber or a variety of synthetic rubbers, a zinc resinate having a zero or negative acid number and made from disproportioned rosin. This patent recognizes the known disadvantages of zinc resinates as tackifiers in pressure sensitive adhesives, and identifies problems involving the softening points of the disproportioned rosin used as a precursor according to its disclosure.

Other U.S. patents disclosing pressure sensitive adhesives based on natural rubber or a variety of synthetic rubbers and containing zinc or zinc-calcium resinates as tackifiers are numbers 3,716,503, 3,912,709, and 3,932,329.

These patents and others suggest the many technical problems that have been encountered and to some degree remain unresolved, such as achieving low color and high clarity, avoiding gellation of solutions of the adhesives (both mentioned in U.S. patent 2,346,995), avoiding noticeable odor, and achieving both high adhesive decomposition temperatures and the low melting or softening points required for particular applications.

Since the adhesive strength of a synthetic rubber-based pressure sensitive adhesives depends on the aromatic component of a block copolymer, another requirement for adhesive efficiency is selective solubility. They should be soluble in natural rubber (NR), styrene/isoprene/styrene rubber (SIS) and styrene/ethylene butylene/styrene rubber (SEBS) but insoluble in the styrene blocks of SIS and SEBS (which means they will be insoluble in styrene/butadiene and styrene/butadiene/styrene rubbers also), since solubility in the aromatic blocks of SIS or SEBS would soften them and weaken the adhesive strength.

The invention relates to a process for making a tackifier for pressure sensitive adhesives that conveys these desirable characteristics to adhesives, which tackifier is a rosin acid solution of a coordination complex having the formula

Me [O-Res]$_2$ $\cdot$ n[HO-Res]

in which
Me is calcium or magnesium;
Res is the rosin moiety of the metal resinate; and
n is a number greater than 0 and less than 6;
and the tackifier is essentially insoluble in the styrene blocks of styrene/butadiene and styrene/butadiene/styrene rubbers.

The tackifiers of the invention may be referred to as complexes of calcium or magnesium resinates with up to 6 molecules of a resin acid for each molecule of the resinate, dissolved in an excess of free rosin acid.

FR 2 142 410 discloses forming metal resinates from disproportionated rosin using a solvent process. The patent teaches that it is not possible to prepare metal resinates of rosin with 3 percent or more of reactive magnesium compound because of the formation of insoluble, infusible products that cannot be used in adhesive compositions.

According to the present invention, a process for making the said tackifier is characterised in that an acetate of magnesium or calcium is reacted with a molar excess of a rosin acid to form a metal resinate that is complexed with the rosin acid in accordance with the equation

Me(Ac)$_2$ + 2 + n(HO-Res) $\rightarrow$ Me(O-Res)$_2$ . n(HO-Res) + 2HAc,

in which Ac is the acetate radical and the other chemical groups are as defined above , the amount of the acetate reactant being from 2% to 16% of the rosin by weight, the acetic acid (HAc) by-product being continuously removed in order fully to react the metal acetate, an excess of free rosin acid being maintained, and the metal resinate complex, dissolved in excess of free rosin acid, is recovered.

Preferably, the amount of the acetate is 6 to 12 % by weight, most preferably about 10%. In the case of 10% calcium acetate, the value of n in the above formula is 2, and it can be calculated that an excess of 4.4 moles of free rosin acid remains.

Also, according to the invention, the tackifier is used by incorporating it in a base rubber with an

2

antioxidant to provide a pressure sensitive adhesive.

Rosin precursors of the metal resinate groups of the invention are well known and may be, for instance, natural gum, and wood rosin, pine oleoresin and corresponding hydrogenated rosins and resin-acid-containing natural or modified materials. Suitable rosins are sometimes described as "tall oil rosin" and "modified rosin".

Suitable natural and hydrogenated or modified rosins and rosin esters are obtainable commercially, for instance, from Hercules Incorporated under the trademarks Staybelite[R] resin, Staybelite[R] 3, 5, 10 esters, Staybelite 570, and FORAL[R] AX, 85, and 105. FORAL AX is preferred.

Preferably, the base rubber is a block copolymer of styrene/isoprene/styrene or styrene/ethylene butylene/styrene, examples of which are commercially obtainable from Shell Chemical Corporation under the trademarks Kraton[R] G1107 and Kraton[R] G1657 respectively. Preferably also, the block copolymers of isoprene or styrene respectively have weight average molecular weights of 50,000 to 500,000 and 5,000 to 50,000.

The adhesive compositions according to the invention will normally contain various additives known in the adhesive composition field, such as dyes, plasticizers such as lanolin, beeswax, fillers, starch, antistatic agents, white oil, microcrystalline wax (for example, Gulfwax 40 or Microwax 15), solvents such as toluene, benzene, mineral spirit, etc. and one or more antioxidants. For instance, a conventional mixture of additives for a typical rubber-based pressure sensitive adhesive composition of the prior art is disclosed in U.S. patent 3,932,329.

Such additives can amount to up to about 75 wt.% or more of the adhesive composition. The antioxidant is present in an amount up to 10 wt.% (preferably .2-3 wt.%), and functions primarily as a color control agent by preventing formation of color bodies and discouraging oxidation of the abietic-type rosin acids having a conjugated system of double bonds.

Particular additives obtainable commercially, are for instance, sold under the trademarks Irganox[R] 1010 and Irgafos[R] 168 by Ciba Geigy Inc., and under the trademarks Agerite Gel[TM] and Wingstay L[TM], respectively by the Vanderbilt Corporation and Goodyear Chemical.

The following examples further illustrate embodiments of the instant invention:

Example I

A. One thousand (1000) grams of melted and distilled highly hydrogenated pale wood rosin (obtainable commercially from Hercules Incorporated as PEXITE[R] wood rosin) having a USRG color lighter than the manufacturer's designation "XC7" is placed within a 2 liter glass reaction flask fitted with an agitator, a heating mantle, nitrogen inlet and outlet ports, and a charge port.

To the rosin melt is slowly added one hundred (100) grams of dry calcium acetate with constant agitation at 250° C under a nitrogen sparge and partial vacuum. After three hours, thirty grams of white mineral oil (commercially available from Witco Co. under the trademark Kaydol[R] Oil and used to lower the Ring and Ball Softening Point)) is added and the reaction mixture allowed to cool slowly to 150°-200° C. Fifteen grams of a 50:50 mix (by weight) of a mixture of the Ciba Geigy anti-oxidants mentioned above is then added to the flask, and the reaction mixture maintained under partial vacuum with nitrogen sparging for an additional half hour while slowly cooling to ambient temperature. The resulting acid-stripped (with a caustic scrubber) calcium resinate complex is found to contain about 2.28% by weight of the monoresinate and about 34.3% by weight of the diresinate. This product is evaluated with respect to color suitability as tackifier components "F-1" and "F-5", and the results reported in Table I; B. The corresponding magnesium resinate complex is prepared essentially in the manner of Example IA by reacting the modified rosin of Example IA with 129 grams of magnesium acetate tetrahydrate under comparable temperature and pressure conditions for about three hours with constant removal of water and acetic acid byproduct as before. The resulting magnesium complex, containing about 33 wt.% of the diresinate and a negligible amount of the monoresinate, is evaluated as tackifiers "F-2" and "F-6" for color suitability and the results reported in Table I; C. Corresponding control adhesive samples, identified respectively as "FCA-4" and "FCA-7" are formulated without the metal resinate complex as follows: (a) FCA-4 - Kraton[R] 1107 styrene/isoprene/styrene block copolymer (SIS base rubber); FORAL AX, hydrogenated rosin and rosin ester; Irganox 1010 antioxidant (.25 wt%); and toluene (to obtain a workable viscosity for tumbling); (b) FCA-7 - Kraton[R] 1657 styrene/ethylene butylene/styrene block copolymer (SEBS) base rubber FORAL AX("9), Irganox 1010 antioxidant (.25 wt%) and toluene (to workable viscosity for tumbling).

Adhesives FCA-4 and FCA-7 are tumbled for 2 days, cast as test strips, dried and stored for testing under controlled conditions in accordance with Example IIA and IIB, the results being reported in Table I.

Example II

Test adhesive compositions containing 40 wt.%, 45 wt.% and 50 wt.% metal resinate tackifiers of Examples IA and IB, are prepared in accordance with the following procedure:

A. Kraton 1107 (SIS) block copolymer is combined respectively with 40 wt.%, 45 wt.% and 50 wt.% of tackifiers "F-1" and "F-2", each one being additionally combined with Irganox 1010 antioxidant (.25 wt.%), and sufficient toluene to obtain a workable viscosity for tumbling. After tumbling for two days, each adhesive composition is cast as a 0.0254 mm (1.0 mil) film on a Mylar[R] test substrate, air dried at ambient temperature for ten minutes, and oven dried at 60°C-70°C for five minutes. The resulting adhesive "FA-1" and "FA-2" test strips are then covered with release paper and stored at 22°C under 50% relative humidity for 24 hours prior to carrying out Standard Peel, Quick Stick and Shear tests as reported in Table I; B. Kraton 1657 SEBS block copolymer is combined respectively with 40 wt.%, 45 wt.%, 50 wt.%, and 60 wt.% of "F-4" and "F-5" tackifier components as reported in Example I, plus Irganox 1010 antioxidant (.25 wt%), and sufficient toluene to obtain a workable viscosity for tumbling. After tumbling for two days, each corresponding adhesive composition "FA-4" and "FA-5" is cast as a 0.0254 mm film on a Mylar test substrate, air dried at ambient temperature for ten minutes and oven dried at 60°C-70°C for five minutes. The resulting test strips are then covered with release paper and stored at 22°C under 50% relative humidity as before for twenty-four hours prior to standard "Peel", "Quick Stick", and "Shear" tests for adhesive properties as reported in Table I, the respective tests being explained below.

Quick Stick Test

Adhesive test strips from Examples I and II 2.54 cm (1 in) are adhered to the faces of clean dry stainless steel test panels using no additional pressure. Each panel is secured onto a jig and each test strip is debonded at a 90° vertical angle to the plane of the panel face at the rate of 30.5 cm/ minute crosshead speed. The test results in gm/cm, identified as a "Quick Stick Test" are reported in Table I.

180° Peel Strength Test

Adhesive test strips from Examples I and II 2.54 cm (1 in) are adhered to the face of a clean dry stainless steel test panel and compressed thereon with one pass of a 2 kg (4.5 lb) roller. The three strips are than debonded at an angle of 180° (parallel to the plane of the test plate) at a rate of 30.5 cm/minute and test results in gm/cm reported in Table I as a "180° Peel Strength Test".

Shear Adhesion Test

Adhesive test strips from Examples I and II 2.54 cm (1 in) wide are adhered to the face of clean dry stainless steel test panels, covering about one half the length thereof and leaving a length hanging beyond the the end of the panel. A 2 kg roller is then rolled up and back over the strip and the other end of the strip peeled away and cut off, leaving 2.54 cm of the strip (6.45 cm$^2$) adhered to the end of the test panel and connected to the free end.

The panel is then mounted in a test jig and tilted back from the vertical to minimize peel forces acting on the sample. The jig is then placed in an oven at 65°C. and a 1000 gram weight secured to the free end of the strip. The time required to shear off the adhered square of the strip is then noted. In the absence of such failure, the amount of tape slippage is recorded and the test terminated.

TABLE I

| Adhesive | Observed Color Evaluation | Tackifier | % Resinate | Quick Stick | 180° Peal | Sheer Adhesion (80°C (Minutes) |
|---|---|---|---|---|---|---|
| · FA-1 | S(*10) | F-1 | 40 | 12.6 | 25 | -- |
| (Ca) | | | 45 | 17 | 40 | 230 |
| Kraton 1107 | | | | | | |
| (SIS) | | | | | | |
| FORAL AX | | | 50 | 22 | 50 | -- |
| FA-2 | S | F-2 | 40 | 17 | 23.5 | -- |
| (Mg) | | | 45 | 17.2 | 37 | 227 |
| Kraton 1107 | | | | | | |
| FORAL AX | | | 50 | 22.4 | 48 | -- |
| FCA-3(Control) | S | -- | 40 | 7.4 | 12 | -- |
| Kraton 1107 | | -- | 45 | 14.0 | 30 | 70 |
| FORAL AX | | -- | 50 | 17.2 | 46 | -- |
| FA-4 | S | F-4 | 40 | 26 | 52 | -- |
| (Ca) | | | 45 | 35 | 61 | -- |
| Kraton 1657 | | | 50 | 45 | 70 | -- |
| (SEBS) | | | | | | |
| FORAL AX | | | 60 | 70 | 101 | 91 |
| FA-5 | S | F-5 | 40 | 25 | 39 | -- |
| (Mg) | | | 45 | 39 | 50 | -- |
| Kraton 1657 | | | 50 | 46 | 61 | -- |
| FORAL AX | | | 60 | 68 | 87 | 125 |
| FCA-7(Control) | S | -- | 40 | 18 | 34 | -- |
| | | -- | 45 | 22 | 46 | -- |
| Kraton 1657 | | -- | 50 | 30 | 56 | -- |
| FORAL AX | | -- | 60 | 53 | 80 | 23 |

*10 "S" indicates a Gardner #6 color value or better.

*11 With Staybelite from Hercules Incorporated.

*12 Adhesive opaque.

## Claims

1. A process for making a tackifier for pressure sensitive adhesives which is a solution in a rosin acid of a coordination complex having the formula

Me [O-Res $_2$]. n [HO-Res]

in which

Me is calcium or magnesium;

Res is the rosin moiety of a metal resinate; and

n is a number greater than 0 and less than 6; the tackifier being essentially insoluble in the styrene blocks of styrene/butadiene and styrene/butadiene/styrene rubbers, which process is characterized in that an acetate of calcium or magnesium is reacted with a molar excess of a rosin acid to form a metal resinate that is complexed with the rosin acid in accordance with the equation

Me (Ac)$_2$ + 2+n(HO-Res) → Me(O-Res)$_2$ . n (HO-Res) + 2HAc, in which Ac is acetic acid and the other chemical groups are defined as above, the amount of the acetate being from 2 to 16 % of the rosin by weight, the acetic acid (HAc) by-product being continously removed in order fully to react the metal acetate, an excess of free rosin acid being maintained, and the metal resinate complex dissolved in the excess of free rosin acid is recovered.

2. A process as claimed in claim 1, further characterized in that the molar excess of the rosin acid is about 4.4 moles.

3. A process as claimed in claim 1 or 2 further characterized in that Me is calcium.

4. A process as claimed in any of the previous claims further characterized in that n is 2.

5. Use of the tackifier as prepared according to any of claims 1 to 4, characterized in that it is incorporated in a natural rubber, a styrene/isoprene/styrene-type copolymer, or a styrene/ethylene butylene/styrene-type copolymer base rubber with an antioxidant to provide a pressure sensitive adhesive.

**Revendications**

1. Procédé de préparation d'un agent d'adhérence pour adhésifs sensibles à la pression, qui est une solution dans un acide colophanique d'un complexe de coordination ayant la formule

Me [O-Res $_2$] . n [HO-Res]

dans laquelle

Me est le calcium ou le magnésium;

Res est la partie colaphane d'un résinate métallique; et

n est un nombre supérieur à 0 et inférieur à 6;

l'agent d'adhérence étant essentiellement insoluble dans les séquences styrène des caoutchoucs styrène/butadiène ou styrène/butadiène/styrène,

procédé caractérisé en ce qu'on fait réagir un acétate de calcium ou de magnésium avec un excès molaire d'un acide colophanique pour former un résinate métallique qui est complexé avec l'acide colophanique selon l'équation

Me(Ac)$_2$ + 2+n(HO-Res) → Me(O-Res)$_2$ . n (HO-Res) + 2HAc

dans laquelle Ac est l'acide acétique et les autres groupements chimiques sont tels que définis précédemment, la quantité d'acetate étant de 2 à 16% de la colophane en poids, le sous-produit acide acétique (HAc) étant éliminé en continu pour faire réagir complètement l'acétate métallique, un excès d'acide colophanique libre étant maintenu, et on récupère le complexe de résinate métallique dissous dans l'excès d'acide colophanique libre.

2. Procédé selon la revendication 1, caractérisé en outre en ce que l'excès molaire d'acide colophanique est d'environ 4,4 moles.

3. Procédé selon la revendication 1 ou 2, caractérisé en outre en ce que Me est le calcium.

**4.** Procédé selon l'une quelconque des revendications précédentes, caractérisé en ce que n vaut 2.

**5.** Utilisation de l'agent d'adhérence tel que préparé selon l'une quelconque des revendications 1 à 4, caractérisée en ce qu'il est incorporé dans un caoutchouc naturel, un copolymère de type styrène/isoprène/styrène ou le caoutchouc à base de copolymère de type styrène/éthylène butylène/styrène, avec un anti-oxydant, pour former un adhésif sensible à la pression.

**Patentansprüche**

**1.** Verfahren zur Herstellung eines Mittels zur Erhöhung der Klebrigkeit für druckempfindliche Klebstoffe, das eine Lösung in einer Harzsäure eines Koordinationskomplexes mit der Formel

$$Me\ [O\text{-}Res\ _2]\ .\ n\ [HO\text{-}Res]$$

ist, wobei
Me Kalzium oder Magnesium ist,
Res der Harzrest eines Metallresinats ist, und n eine Zahl größer als 0 oder kleiner als 6 ist; wobei das Mittel zur Erhöhung der Klebrigkeit im wesentlichen unlöslich im Styrolblock von Styrol/Butadien- und Styrol/Butadien/Styrolgummis ist, wobei dieses Verfahren dadurch gekennzeichnet ist, daß ein Kalzium- oder Magnesiumacetat mit einem molaren Überschuß einer Harzsäure zur Reaktion gebracht wird, um ein Metallresinat zu bilden, das mit der Harzsäure komplexiert wird, in Übereinztimmung mit der Gleichung
$Me\ (Ac)_2\ +\ 2+n(HO\text{-}Res)\ \rightarrow\ Me\ (O\text{-}Res)_2\ \bullet\ n\ (HO\text{-}Res)\ +\ 2HAc$, worin Ac Essigsäure ist und die anderen Gruppen wie oben definiert sind, wobei die Menge des Acetats 2 bis 16 % des Gewichts des Harzes beträgt, das Essigsäure (HAc)-Nebenprodukt fortlaufend entfernt wird, um daz Metallacetat vollständig umzusetzen, wobei ein Überschuß an freier Harzsäure erhalten bleibt, und der Metallresinatkomplex, der in dem Überschuß an freier Harzsäure gelöst ist, gewonnen wird.

**2.** Verfahren nach Anspruch 1, weiterhin dadurch gekennzeichnet, daß der molare Überschuß der Harzsäure ungefähr 4,4 Mol beträgt.

**3.** Verfahren nach Anspruch 1 oder 2, weiterhin dadurch gekennzeichnet, daß Me Kalzium ist.

**4.** Verfahren nach einem der vorhergehenden Ansprüche, weiterhin dadurch gekennzeichnet, daß n 2 ist.

**5.** Verwendung des Mittels zur Erhöhung der Klebrigkeit gemäß einem der Ansprüche 1 bis 4, gekennzeichnet dadurch, daß es in einen Naturkautschuk, ein Copolymer vom Typ Styrol/Isopren/Styrol, oder ein Copolymer vom Typ Styrol/Ethylen Butylen/Styrol-Ausgangsgummi mit einem Antioxidationsmittel eingebaut ist, um einen druckempfindlichen Klebstoff bereitzustellen.